# EUROPEAN PATENT APPLICATION

(11) **EP 4 360 885 A1**
(43) Date of publication of application: **01.05.2024**
(21) Application number: 23167603.2
(22) Date of filing: 12.04.2023
(51) Int. Cl.: B41F 33/00, G06T 7/00

(54) **PRINTED-MATTER INSPECTION SYSTEM, PROGRAM, AND PRINTED-MATTER INSPECTION METHOD**

(30) Priority: 16.09.2022 JP 2022147756
(71) Applicant: FUJIFILM Business Innovation Corp., Minato-ku Tokyo (JP)
(72) Inventor: OHIRA, Yoshie, Yokohama-shi (JP); KIKUMOTO, Takashi, Yokohama-shi (JP); ISHIKAWA, Shogo, Yokohama-shi (JP)
(74) Representative: Haseltine Lake Kempner LLP

(57) **Abstract**

A printed-matter inspection system includes a processor that inspects printed matter, and a display device that displays a result of the inspection. The processor is configured to: compare a scanned image with a reference image of an inspection-target page of the printed matter to perform inspection for at least one defect that is present in the scanned image, the scanned image being obtained by scanning the inspection-target page; and obtain information about post-processing that is to be performed on the printed matter, and, on the basis of the information about the post-processing, display, on the display device, the at least one defect in association with at least one simulated image of the printed matter obtained after the post-processing.

## Description

### Background

### (i) Technical Field

The present disclosure relates to a printed-matter inspection system, a program, and a printed-matter inspection method.

### (ii) Related Art

Japanese Patent No. 5367016 discloses a data generating apparatus, a method for generating data, and a program which enable a finished sample to be made by using a print on demand (POD) system for small-lot printing, without defects in bookbinding, such as incorrect collating. First printed matter is formed on the basis of a first sheet, first imposition data corresponding to the first sheet, and page description data representing multiple pages. The data generating apparatus generates print data for simulatively reproducing, on a second sheet, the form of the final printed matter obtained by subjecting the first printed matter to a first processing sequence including a sheet folding process. The second sheet has a size different from that of the first sheet. The data generating apparatus includes a side-stitch binding determining unit, a job defining unit, and a data generating unit. The side-stitch binding determining unit refers to the first imposition data to determine whether the first processing sequence includes a side-stitch binding process. When the side-stitch binding determining unit determines that a side-stitch binding process is included, the job defining unit defines a job, including a printing process and the sheet folding process, for each folding section on which side-stitch binding is to be performed. The data generating unit generates print data, corresponding to the second sheet, for each job defined by the job defining unit.

The data generating apparatus includes the side-stitch binding determining unit which determines whether the first processing sequence includes a side-stitch binding process, and the data generating unit which, when a side-stitch binding process is included, generates print data, corresponding to the second sheet, for each job defined for the corresponding folding section on which side-stitch binding is to be performed. Jobs, each including a printing process and a sheet folding process, are registered one by one. Thus, even in a bookbinding form including side-stitch binding, the form of the final printed matter using the first sheet may be simulatively reproduced by using the second sheet, and a finished sample may be made by using a POD system without defects in bookbinding, such as incorrect collating.

In a printing factory, printed sheets as a print result may be inspected. When defects such as printing defects are detected from a result of inspection, a worker may visually inspect actual printed matter while referring to the inspection result displayed on a screen, for example, on a display device. When printed sheets as a print result are inspected, even if defects such as printing defects are detected at the time point of completion of printing, it is difficult to extract printed sheets in the way, for example, in an inline process including a machine which performs post-processing, such as folding, binding, and cutting, to which a printing process is connected. Thus, inspection is performed after post-processing.

### Summary

Accordingly, it is an object of the present disclosure to provide a technique which enables a worker to easily recognize defects in post-processed printed matter, compared with the case in which printing defects detected in inspection are displayed on scanned images, which are obtained by scanning printed matter, without consideration of post-processing performed on the printed matter.

According to a first aspect of the present disclosure, there is provided a printed-matter inspection system comprising a processor that inspects printed matter; and a display device that displays a result of the inspection, wherein the processor is configured to: compare a scanned image with a reference image of an inspection-target page of the printed matter to perform inspection for at least one defect that is present in the scanned image, the scanned image being obtained by scanning the inspection-target page; and obtain information about post-processing that is to be performed on the printed matter, and, on a basis of the information about the post-processing, display, on the display device, the at least one defect in association with at least one simulated image of the printed matter obtained after the post-processing.

According to a second aspect, in the printed-matter inspection system according to the first aspect, the processor is configured to display the at least one defect on a page in the at least one simulated image of the printed matter obtained after the post-processing.

According to a third aspect, in the printed-matter inspection system according to the second aspect, the processor is configured to convert, for display, a position of the at least one defect in the scanned image to a position in the at least one simulated image of the printed matter obtained after the post-processing.

According to a fourth aspect, in the printed-matter inspection system according to any one of the first to third aspects, the at least one defect comprises a plurality of defects, and the processor is configured to, among the defects that are present in the scanned image, cause a defect that is not present in the at least one simulated image of the printed matter obtained after the post-processing, to be hidden.

According to a fifth aspect, the printed-matter inspection system according to the fourth aspect, the processor is configured to, among the defects that are present in the scanned image, cause a defect that is at a position of a register mark or at a position in a margin in the printed matter obtained after the post-processing, to be hidden.

According to a sixth aspect, in the printed-matter inspection system according to the first or second aspect, the at least one simulated image comprises a plurality of simulated images, and the processor is configured to display, in page order, the simulated images of the printed matter obtained after the post-processing, and display the at least one defect in accordance with the page order.

According to a seventh aspect, in the printed-matter inspection system according to the sixth aspect, the processor is configured to display, in a spread, the simulated images of the printed matter obtained after the post-processing, and display the at least one defect in the spread.

According to an eighth aspect, in the printed-matter inspection system according to any one of the first to seventh aspects, the processor is configured to further display a type of the at least one defect on the display device.

According to a ninth aspect of the present disclosure, there is provided a program causing a computer to execute a process comprising: comparing a scanned image with a reference image of an inspection-target page of printed matter to perform inspection for a defect that is present in the scanned image, the scanned image being obtained by scanning the inspection-target page; and obtaining information about post-processing that is to be performed on the printed matter, and, on a basis of the information about the post-processing, displaying, on a display device, the defect in association with a simulated image of the printed matter obtained after the post-processing.

According to a tenth aspect of the present disclosure, there is provided a printed-matter inspection method comprising: comparing a scanned image with a reference image of an inspection-target page of printed matter to perform inspection for a defect that is present in the scanned image, the scanned image being obtained by scanning the inspection-target page; and obtaining information about post-processing that is to be performed on the printed matter, and, on a basis of the information about the post-processing, displaying, on a display device, the defect in association with a simulated image of the printed matter obtained after the post-processing.

The printed-matter inspection system, the program, and the printed-matter inspection method according to the first, ninth, and tenth aspects enable a defect, which is detected at the time point of completion of printing, to be recognized on an image after post-processing.

The printed-matter inspection system according to the second, sixth, and seventh aspects further enables inspection results to be checked in the page order of simulated images of printed matter obtained after post-processing.

The printed-matter inspection system according to the third aspect further enables the correct position of a defect in a simulated image of printed matter, which is obtained after post-processing, to be recognized.

The printed-matter inspection system according to the fourth and fifth aspects further enables a defect, which is not present in a simulated image of printed matter obtained after post-processing, to be prevented from being mistakenly displayed.

The printed-matter inspection system according to the eighth aspect further enables the type of a defect to be recognized.

### Brief Description of the Drawings

Exemplary embodiment of the present disclosure will be described in detail based on the following figures, wherein:
Fig. 1 is a diagram illustrating the system configuration according to an exemplary embodiment;
Fig. 2 is a block diagram illustrating functions of a print server according to an exemplary embodiment;
Fig. 3 is a block diagram illustrating the configuration of a print server according to an exemplary embodiment;
Figs. 4A to 4C are schematic diagrams for describing saddle-stitching according to an exemplary embodiment;
Figs. 5A and 5B are diagrams for describing simulated images of a bound book according to an exemplary embodiment;
Fig. 6 is a diagram for describing a first example of display of an inspection result according to an exemplary embodiment;
Figs. 7A and 7B are diagrams for describing a first example of display of a finishing result according to an exemplary embodiment;
Fig. 8 is a diagram for describing a second example of display of an inspection result according to an exemplary embodiment;
Fig. 9 is a diagram for describing a second example of display of a finishing result according to an exemplary embodiment;
Fig. 10 is a flowchart (part 1) of a process according to an exemplary embodiment;
Fig. 11 is a flowchart (part 2) of the process according to an exemplary embodiment; and
Fig. 12 is a schematic diagram for describing a scanned image and a finishing image according to an exemplary embodiment.

### Detailed Description

An exemplary embodiment of the present disclosure will be described below on the basis of the drawings.

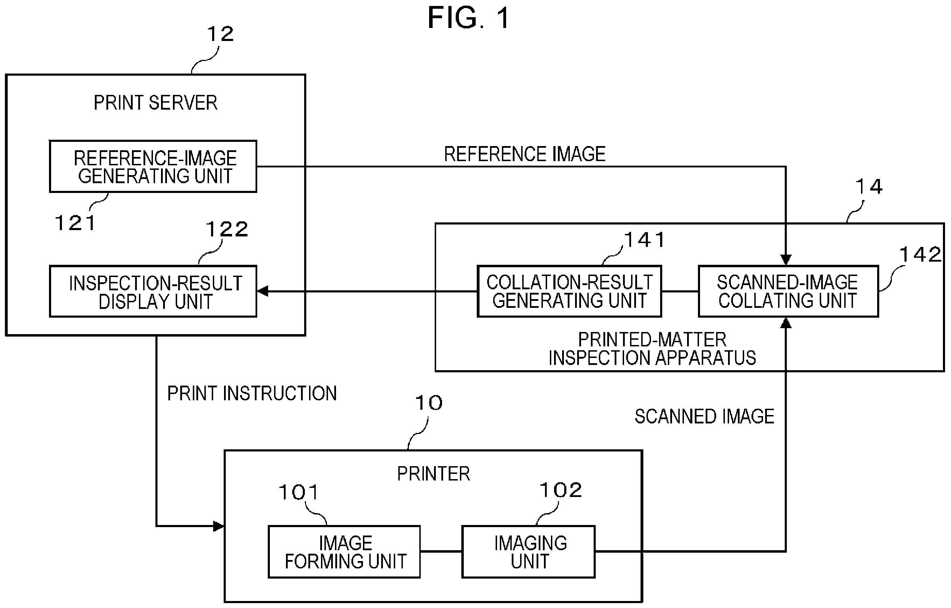

Fig. 1 is a diagram illustrating the system configuration of a printed-matter inspection system according to the present exemplary embodiment. The printed-matter inspection system includes a printer 10, a print server 12, and a printed-matter inspection apparatus 14. The printer 10, the print server 12, and the printed-matter inspection apparatus 14 are connected through communication lines so as to be capable of receiving/transmitting data from/to each other. The communication lines may be wired/wireless, and may be public lines/private lines. An example of the communication lines is, but not limited to, a local area network (LAN).

The print server 12 supplies, as a print instruction, print data of a print job to the printer 10. The print server 12, which includes a reference-image generating unit 121, generates reference-image data, which is different from print data, from the rasterization result of a print job, and supplies the reference-image data to the printed-matter inspection apparatus 14. The print server 12, which also includes an inspection-result display unit 122, receives collation results from the printed-matter inspection apparatus 14, and displays the received collation results as inspection results. The print server 12 may be formed of one or more server computers, each including one or more processors and a storage device. The print server 12 will be further described in detail below.

The printer 10, which includes an image forming unit 101, receives a print instruction from the print server 12, and performs printing on sheets on the basis of the print data included in the print instruction. The printed matter is discharged from a discharge tray of the printer 10. The printed matter printed by the printer 10 is an inspection target. The printer 10 includes an imaging unit (built-in scanner) 102 which scans printed matter, which is to be inspected, to generate scanned-image data. When the printed matter is obtained through duplex printing, in response to detection of this, the imaging unit 102 scans both sides of each sheet of the printed matter. The scanned-image data is supplied to the printed-matter inspection apparatus 14.

The configuration of the printer 10 is known, but will be described briefly.

The printer 10 prints images on print media such as sheets on the basis of a job (print job) obtained from the print server 12. A print job is a process unit of print operation requested by a single print instruction.

The printer 10 includes, in addition to the image forming unit 101, a holding unit, a conveying unit, a discharge unit, and a controller. The holding unit has a function of holding sheets supplied to the image forming unit 101, and includes holding trays on which sheets are loaded.

The conveying unit has a function of conveying a sheet, which is held in the holding unit, to the image forming unit 101. The conveying unit includes, for example, a feeding roller, which feeds a sheet from the holding unit, and multiple pairs of conveying rollers which are disposed along the conveyance path from the holding unit to the image forming unit 101.

The image forming unit 101 has a function of printing an image on a sheet. The image forming unit 101 prints an image on a sheet, for example, by using an electrophotographic system. That is, the image forming unit 101 prints an image on a sheet through the processes of charging, exposure to light, developing, transfer, and fixing. In addition, the image forming unit 101 has a function of reversing and conveying a sheet so that images are printed on both the front and back faces of the sheet.

The discharge unit is a part on which a printed sheet is discharged. For example, the discharge unit includes multiple sites disposed vertically, and a sheet is discharged to the site designated in a print job.

The controller controls operations of the units of the printer 10 on the basis of a received print job. When the controller receives multiple print jobs, the controller uses a spooler to control the order of the print jobs. In addition, the controller controls the operations of the imaging unit 102, and generates scanned-image data through scanning printed matter, which is printed by the image forming unit 101, by turning on the operation of the imaging unit 102 for all the pages included in a job or pages which are set as inspection targets.

For pages which are among all the pages included in a job and which are not set as inspection targets, the operation of the imaging unit 102 is turned off, and scanned-image data is not generated.

The printed-matter inspection apparatus 14, which includes a scanned-image collating unit 142, obtains reference-image data from the print server 12 and scanned-image data from the printer 10, and compares, for collation, both pieces of image data with each other to detect defects which have occurred in the printing. In a scanned image, a part different from that in a reference image, more particularly, a part having a difference between the images which is greater than or equal to a threshold, is detected as a defect. In addition, the printed-matter inspection apparatus 14, which includes a collation-result generating unit 141, generates collation results on the basis of processing results from the scanned-image collating unit 142. A collation result includes a reference image, a scanned image corresponding to the reference image, and information, which is the result of collation, about whether defects are present and their positions. Such collation results are provided to the print server 12. The printed-matter inspection apparatus 14 may be formed of one or more computers, each including a processor and a storage device.

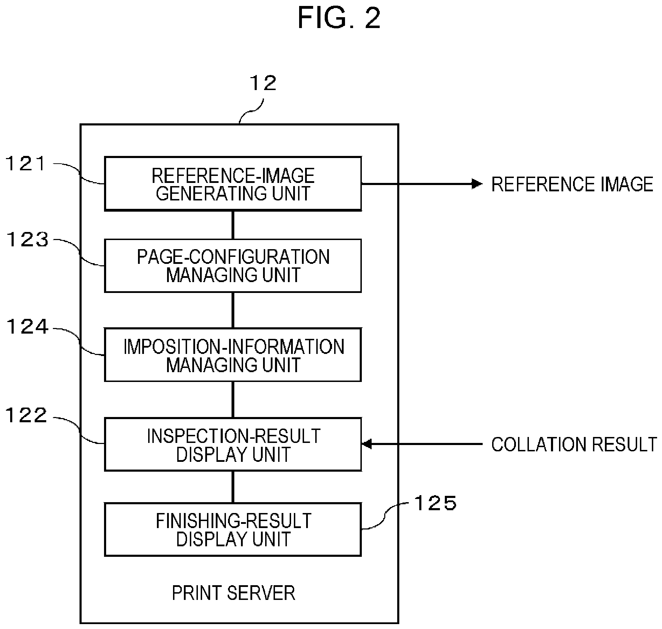

Fig. 2 is a block diagram illustrating functions of the print server 12. The print server 12 includes, as functional blocks, the reference-image generating unit 121, a page-configuration managing unit 123, an imposition-information managing unit 124, the inspection-result display unit 122, and a finishing-result display unit 125.

As described above, the reference-image generating unit 121 generates reference-image data from the rasterization result of a print job. The rasterization process is known, and is a process of generating raster data (image data) through a drawing process on the basis of intermediate-format data. The rasterization process includes a data-format conversion process of performing conversion from a page description language (PDL) format to a raster format, and a color-matching process using ICC profiles. The reference-image data is expected image data that is to be printed, that is, image data of a ground-truth image without defects.

For each print job, the page-configuration managing unit 123 manages information about the pages included in the print job, information, for each of the pages, about whether the page is to be inspected, and the inspection result of each page. The inspection result of each page is a collation result received from the printed-matter inspection apparatus 14.

The imposition-information managing unit 124 manages imposition information of each print job. The imposition refers to the state in which multiple pieces of print data are arranged in a single print sheet.

The inspection-result display unit 122 receives collation results supplied from the printed-matter inspection apparatus 14, and displays the received collation results as inspection results. Specifically, the inspection-result display unit 122 displays a scanned image of each page or both a reference image and a scanned image side by side on the basis of the configuration of the pages in a print job. When a collation result includes a defect, an area, in which the defect is detected, of a scanned image is highlighted for display. The form of highlight display may be any. Examples of this include, but not particularly limited to, surrounding with a rectangle or a circle, display in a specific color, blinking for display, and display of characters.

The finishing-result display unit 125 displays simulated images of the final output of a print job. That is, simulated images of a bound book are displayed on the basis of the page configuration by using the scanned images of the pages. Simulated images of a bound book are images in which the pages of a book, which indicates the final output of a print job and which is the final product, are simulatively reproduced sequentially in two dimensions. For example, the image on page 1 is first displayed; and the images on page 2 and page 3 are then displayed sequentially in accordance with a user's paging operation on the book, and so on. Simulated images of a bound book are known as a so-called electronic book. In the present exemplary embodiment, simulated images of a bound book are illustrated as simulated images of post-processed printed matter. This may encompass, not only two-dimensional display, but also three-dimensional display.

The "bound book" in the present exemplary embodiment means a bound book formed through post-processing, such as folding, binding, and cutting, performed on printed sheets, and is softcover in most cases, but may be casebound.

Fig. 2 illustrates the inspection-result display unit 122 and the finishing-result display unit 125 as different functional blocks. Alternatively, these units may be implemented with a single display device. For example, inspection results may be displayed on a single display device, and a finishing result may be displayed on the same display device in accordance with a user's operation.

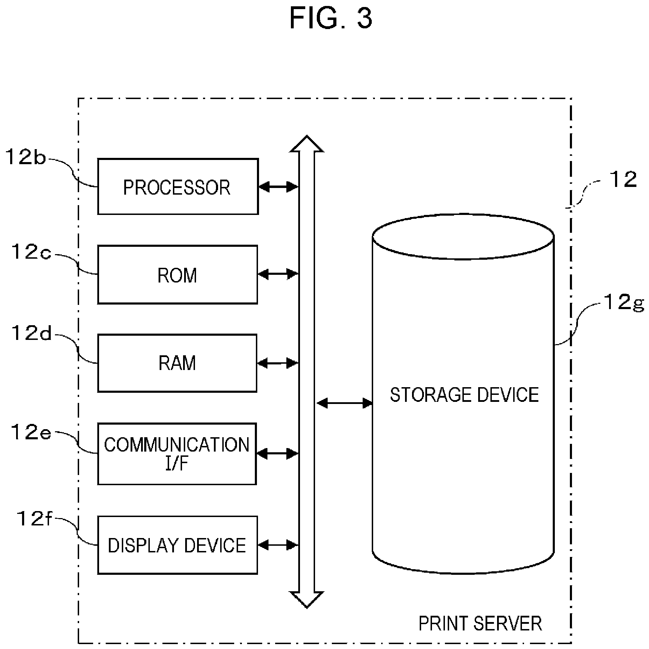

Fig. 3 is a block diagram illustrating the configuration of the print server 12. The print server 12 is formed of one or more server computers, each including one or more processors 12b, a read-only memory (ROM) 12c, a random-access memory (RAM) 12d, a communication interface (I/F)12e, a display device 12f, and a storage device 12g.

The one or more processors 12b read programs stored in the ROM 12c or the storage device 12g, and use the RAM 12d as a working memory to implement various functions. The processors 12b implement the reference-image generating unit 121, the page-configuration managing unit 123, and the imposition-information managing unit 124 in Fig. 2.

The communication I/F 12e supplies the printed-matter inspection apparatus 14 with a print instruction including print data. The communication I/F 12e outputs reference-image data to the printed-matter inspection apparatus 14, and receives collation results from the printed-matter inspection apparatus 14. The communication I/F 12e outputs the received collation results to the processors 12b. The processors 12b generate inspection-result images and a finishing-result images on the basis of the collation results.

The display device 12f is formed of a display, such as a cathode-ray tube (CRT), a liquid-crystal display, or an organic light-emitting diode (OLED) display, and displays inspection-result images and finishing-result images in accordance with a display control signal from the processors 12b. The display device 12f causes the inspection-result display unit 122 and the finishing-result display unit 125 in Fig. 2 to be implemented.

The storage device 12g is formed of a nonvolatile memory, such as a hard disk drive (HDD) or a solid state drive (SSD). The storage device 12g stores, in addition to programs, various types of image data and collation results. The image data includes reference-image data and scanned-image data corresponding to the reference-image data.

In the embodiment above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiment above, the term "processor" is broad enough to encompass one processor or plural processors in collaboration which are located physically apart from each other but may work cooperatively. The order of operations of the processor is not limited to one described in the embodiment above, and may be changed.

The configuration of the printed-matter inspection apparatus 14, which is not illustrated, is substantially the same as that in Fig. 3. That is, the printed-matter inspection apparatus 14, which includes a processor, a ROM, a RAM, a communication I/F, a display device, and a storage device, receives reference-image data from the print server 12 through the communication I/F, and receives scanned-image data from the printer 10. The processor compares, for collation, both the images with each other. The processor compares, for collation, the reference-image data with the scanned-image data to detect whether defects such as smudges due to printing, which occur in printed matter, are present. The processor outputs collation results to the print server 12 through the communication I/F. The processor causes the scanned-image collating unit 142 and the collation-result generating unit 141 in Fig. 1 to be implemented.

In the description above, the print server 12 displays inspection results and a finishing result. Alternatively, instead of the print server 12, or in addition to the print server 12, the printed-matter inspection apparatus 14 may generate inspection-result images and finishing-result images on the basis of the collation results, and may display these images on the display device of the printed-matter inspection apparatus 14. Similarly, the page-configuration managing unit 123 and the imposition-information managing unit 124 may be included in the printed-matter inspection apparatus 14. In this case, the inspection-result display unit 122 and the finishing-result display unit 125 are included in the printed-matter inspection apparatus 14.

In short, in the printed-matter inspection system according to the present exemplary embodiment, the function of comparing, for collation, a reference image with a scanned image is included in the printed-matter inspection apparatus 14. In contrast, the function of displaying collation results may be included in either one or both of the printed-matter inspection apparatus 14 and the print server 12.

In the printed-matter inspection system according to the present exemplary embodiment, a reference image is compared, for collation, with a scanned image to detect whether defects such as smudges due to printing, which occur in printed matter, are present. Removal of defective sheets, in which defects have occurred, at the time point of completion of printing may affect a post-processed bound book. This is because removal of defective sheets results in incomplete sheet sets, easily leading to a mistake in the cutting process. In addition, if the printing process is connected in an inline process (an environment in which the processes are connected automatically until the post-processing), it is originally difficult to remove defective sheets in the way.

Therefore, defective sheets are removed in an inspection after post-processing, that is, after bookbinding. The page order of scanned images, the positions of arranged images, and the like are changed after bookbinding. Thus, it is not always easy to find out at which positions on which pages the defects are present in a bound book.

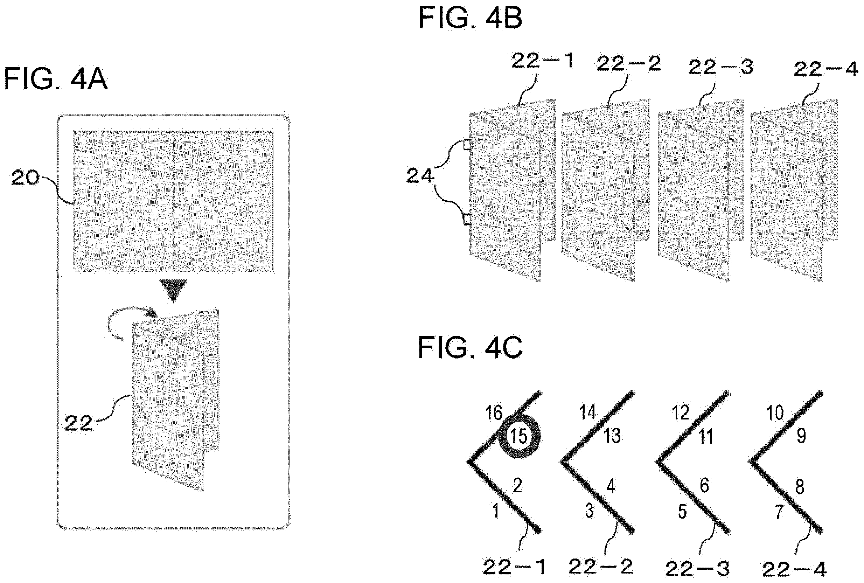

Figs. 4A to 4C schematically illustrate the process of saddle-stitch bookbinding as an example. The "saddle-stitch bookbinding" is a method of bookbinding in which sheets are folded into two and are bound in their middle part with wires.

As illustrated in Fig. 4A, images are formed on both the front and back faces of a sheet 20, and the sheet is folded into two at the middle to obtain bifold paper 22. As illustrated in Fig. 4B, multiple pieces of bifold paper (fold section) 22-1, 22-2, 22-3, 22-4, etc., are stacked to be bound at the middle part with wires 24.

Fig. 4C is a schematic exploded view of a saddle-stitch bound book viewed from above. In Fig. 4C, the page numbers after bookbinding are illustrated. The bifold paper 22-1 corresponds to the first sheet in the printing process; the bifold paper 22-2 corresponds to the second sheet in the printing process; the bifold paper 22-3 corresponds to the third sheet in the printing process; the bifold paper 22-4 corresponds to the fourth sheet in the printing process. In this case, the correspondence is
the front face of the bifold paper 22-1 (the first sheet in the printing process) → page 1 and page 16 after bookbinding;
the back face of the bifold paper 22-1 (the first sheet in the printing process) → page 2 and page 15 after bookbinding;
the front face of the bifold paper 22-2 (the second sheet in the printing process) → page 3 and page 14 after bookbinding;
the back face of the bifold paper 22-2 (the second sheet in the printing process) → page 4 and pave 13 after bookbinding;
the front face of the bifold paper 22-3 (the third sheet in the printing process) → page 5 and page 12 after bookbinding;
the back face of the bifold paper 22-3 (the third sheet in the printing process) → page 6 and page 11 after bookbinding;
the front face of the bifold paper 22-4 (the fourth sheet in the printing process) → page 7 and page 10 after bookbinding; and
the back face of the bifold paper 22-4 (the fourth sheet in the printing process) → page 8 and page 9 after bookbinding.

When, at the time point of completion of printing, it is detected that a defect has occurred at a lower-right position of the back face of the bifold paper 22-1 which is the first sheet in the printing process, the defect occurs on page 15, which is surrounded by a circular mark in Fig. 4C, after bookbinding. Thus, it is relatively difficult to grasp on which page the defect is present after bookbinding.

Assume the following case: a reference image is compared, for collation, with a scanned image; a defect is detected in the scanned image; and the scanned image, in which the defect is detected, is simply displayed on a display device for presentation to a user. In this case, although the user recognizes that a defective sheet is present somewhere in the printed matter, the user has difficulty in locating the defect after bookbinding, which may lead to difficulty in inspection after bookbinding.

Therefore, in the present exemplary embodiment, simulated images of a bound book as a finishing result are generated from the obtained scanned images, and are displayed on the display device 12f. Detected defects are displayed in association with the simulated images of a bound book.

As a matter of course, as described above, there is a certain correspondence between the front and back faces of each sheet in the printing process and each page after bookbinding. Thus, use of the correspondence theoretically allows a user to estimate a page on which a detected defect is present after bookbinding. However, more direct grasp of the positions of defects is achieved by displaying the defects in association with simulated images of a bound book.

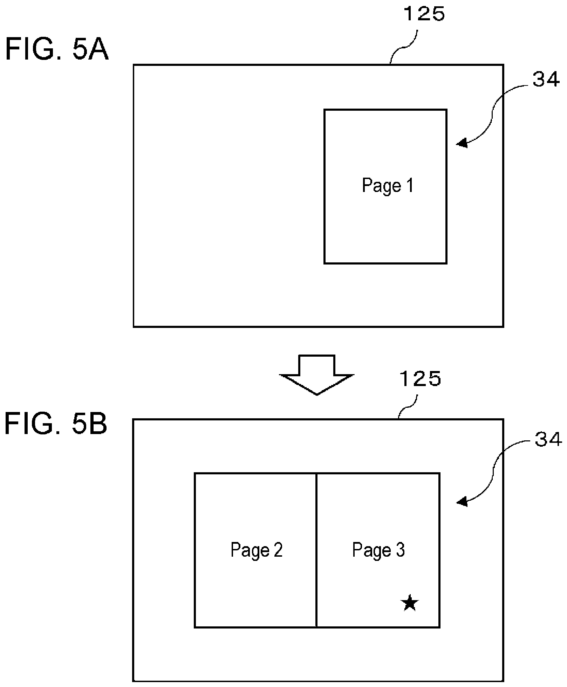

Figs. 5A and 5B illustrate exemplary simulated images of a bound book which are displayed by the finishing-result display unit 125. Fig. 5A illustrates an image of page 1 after bookbinding, which is an image, among scanned images, corresponding to the right half of the front face of the first sheet in the printing process. Fig. 5B illustrates images of page 2 and page 3 in a spread after bookbinding, which are an image, among scanned images, corresponding to the left half of the back face of the first sheet in the printing process and an image corresponding to the right half of the front face of the second sheet in the printing process. The processors 12b use the correspondence, which is illustrated in Fig. 4C, between sheets in the printing process and pages after bookbinding to form simulated images of a bound book from the scanned images. In addition, when the processors 12b detect a defect in the right half of the front face of the second sheet in the printing process from the result of comparison, for collation, between reference images and scanned images, the processors 12b display an indicator, indicating that a defect is present, in the corresponding scanned image of page 3 in the simulated image of the bound book. Fig. 5B illustrates the position, at which a defect has occurred, by using a star mark. However, the form of the mark is any. The size of a defect may be indicated by using the size of a mark, or the degree of significance of a defect may be indicated by using the color of a mark.

When the processors 12b are to form simulated images of a bound book, the processors 12b exclude so-called register marks and margins, which are to be cut, from the simulated images of a bound book, and do not reflect such marks and parts in the images. In addition, cutting causes occurrence of shifts between the positions of defects in the sheets after the printing process and the positions of the defects after cutting. Thus, the processors 12b calculate again the positions of detected defects in consideration of the parts that are to be cut. The processors 12b calculate the finishing width and height, that is, the width and height after bookbinding from the bookbinding method and the sheets (the output-sheet size, the layout, the finishing size, and the finishing orientation), and reflect the calculated results to the finishing result.

A screen displayed by the inspection-result display unit 122 and a screen displayed by the finishing-result display unit 125 will be described more specifically below.

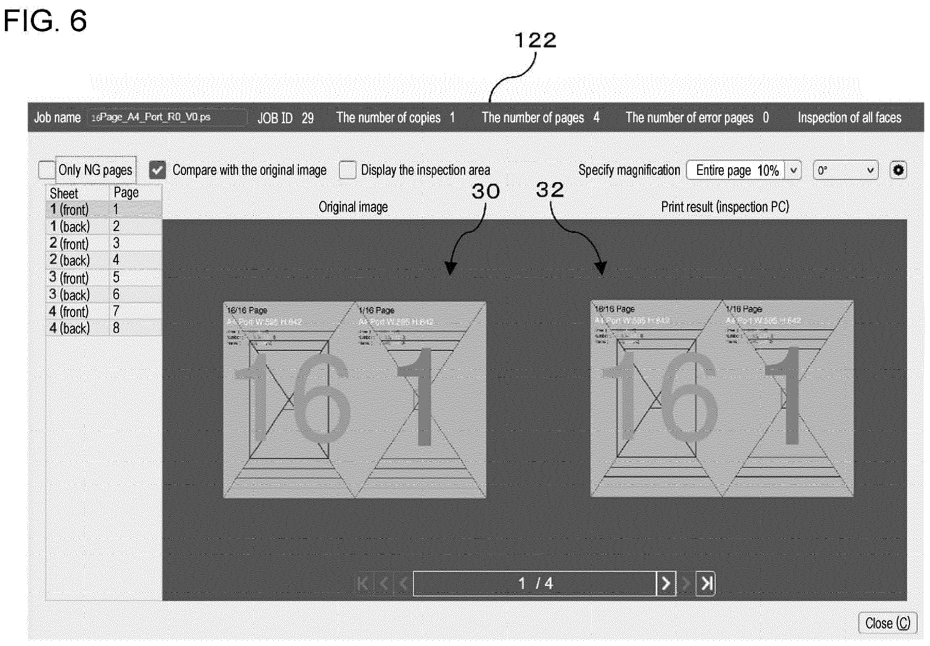

Fig. 6 illustrates an exemplary screen displayed by the inspection-result display unit 122. The processors 12b illustrate a reference image 30 and a scanned image 32 side by side. In Fig. 6, the numbers, such as " 16" and " 1", displayed in the reference image 30 and the scanned image 32 indicate the corresponding pages after bookbinding. As described above, this case corresponds to
the front face of the first sheet in the printing process → page 1 and page 16 after bookbinding.

Thus, in the reference image 30 and the scanned image 32 which correspond to the front face of the first sheet in the printing process, "16", which indicates page 16, is displayed on the left half, and " 1", which indicates page 1, is displayed on the right half (see Fig. 4B).

At an upper-left position of the screen, select menus of
- Only NG pages
- Compare with the original image
- Display the inspection area
are displayed. Fig. 6 is an exemplary screen displayed when, among these,
- Compare with the original image
is selected by a user. The "original image" means a reference image.

On the left side of the screen, a select menu for sheets after the printing process is displayed. For example,
1 (front),
1 (back),
2 (front),
2 (back),
are displayed. When a user selects
1 (front), the reference image 30 and the scanned image 32 which correspond to the first sheet are displayed side by side.

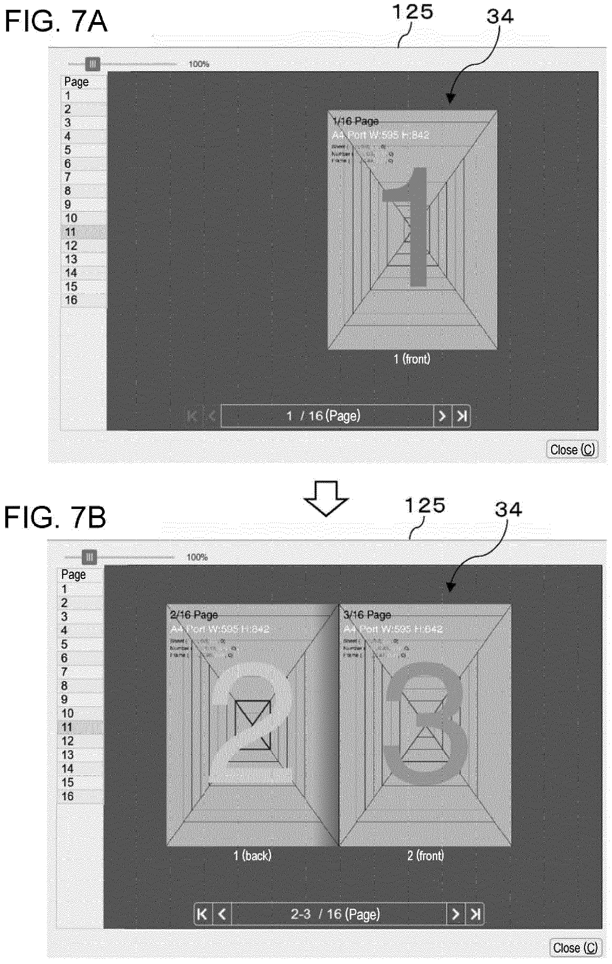

Figs. 7A and 7B illustrate exemplary screens displayed by the finishing-result display unit 125. Fig. 7A illustrates a simulated image 34 of page 1 of a bound book. As described above, the processors 12b display an image 34 illustrating the state in which bookbinding has been performed after cutting of register marks and margins. In Fig. 7A, "1" indicates page 1 of the bound book. Fig. 7B illustrates an image displayed when a user performs a paging operation from the state in Fig. 7A, and an image 34 is displayed in a spread, which simulates the bound book, of page 2 and page 3. In Fig. 7B, "2" and "3" indicate page 2 and page 3 of the bound book, respectively.

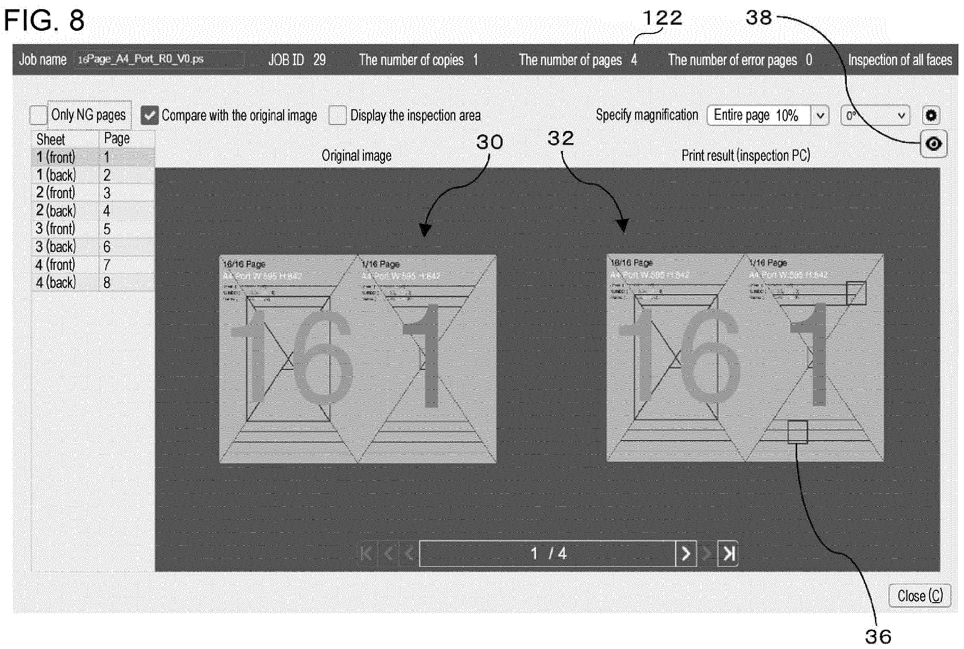

Fig. 8 illustrates another exemplary screen displayed by the inspection-result display unit 122. The processors 12b illustrate a reference image 30 and a scanned image 32 corresponding to the reference image 30 side by side. When a defect is detected in the scanned image 32, the processors 12b display a specific mark at the position of the detected defect. In Fig. 8, a defect is detected in the right half of the scanned image 32 in the first sheet in the printing process. Thus, the position of the defect is illustrated by being surrounded with a rectangle 36.

At an upper-right position of the screen, a button 38 for making a transition to a finishing-result screen is displayed. When a user is to visually check the finishing-result screen, that is, a simulated image of a bound book, the user selects the button 38. The user visually checks the screen in Fig. 8, and operates the button 38 to check at which position on which page the detected defect is present after bookbinding.

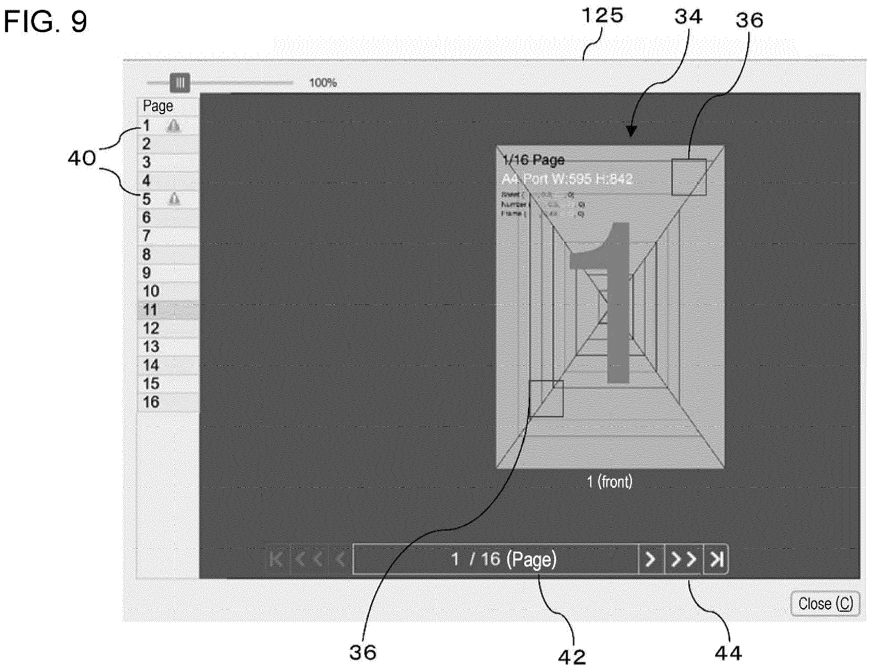

Fig. 9 illustrates an exemplary screen for the finishing result which is displayed when a user operates the button 38 on the screen in Fig. 8. The screen displays a simulated image 34 of page 1 of the bound book, and the positions of the detected defects are displayed by being surrounded with rectangles 36. The positions of the rectangles 36 in Fig. 9 reflect the results of recalculation of the positions of the rectangles 36 in Fig. 8 in consideration of the reduction in size caused by cutting.

On the left side of the screen in Fig. 9, a menu for selecting a page in a bound book is displayed, and symbol figures (warning icons) indicating defects are displayed for pages in which defects are detected. In Fig. 9, defects have been detected on page 1 and page 5. In response to this, warning icons are displayed for page 1 and page 5. A user may also recognize on which pages of the bound book the defects occur by visually checking this menu.

At the bottom of the screen in Fig. 9, a page indicator 42, indicating the page which is being displayed in the current screen, is displayed. In Fig. 9, " 1/16 (page)" indicates that page 1 among all the 16 pages is being displayed. In the page indicator 42, in addition to a ">" button which means forward in order, a ">>" button 44, which means fast forward, is displayed. When a user operates the button for forward in order, the processors 12b display an image in a spread of the next pages of the currently displayed page, that is, page 2 and page 3. When a user operates the button 44, the processors 12b move to a page on which a defect is detected, and displays the page. If defects are detected on page 1 and page 5, the processors 12b display an image in a spread of page 4 and page 5.

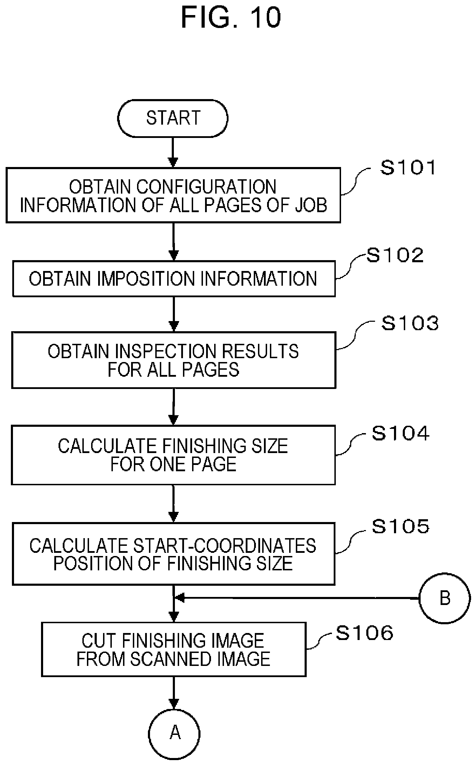

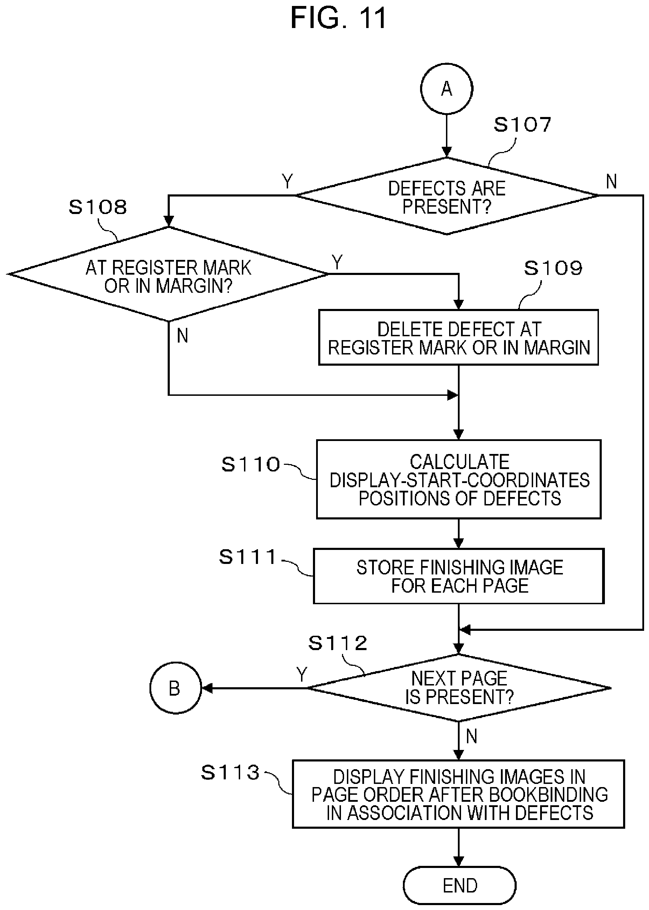

Figs. 10 and 11 illustrate flowcharts of the process according to the present exemplary embodiment. The process is performed by the processors 12b (or the processors of the printed-matter inspection apparatus 14).

The configuration information and imposition information of all the pages of a print job are obtained (S101, S102).

Generated reference-image data is supplied to the printed-matter inspection apparatus 14, and inspection results are obtained from the printed-matter inspection apparatus 14 as a result of comparison, for collating, between the reference-image data and scanned-image data (S103). The inspection results are inspection results for all the pages selected as inspection targets. The inspection results include position information of all the defects. The position information of a defect is obtained by using, as the reference, the reference point of a scanned image, for example, the upper-left point of a rectangular scanned image.

The page-configuration information of the print job is used to calculate the finishing size for one page (S104), and to calculate the start-coordinates position of the finishing size (S105). The finishing size corresponds, for example, to the size of the image 34 in Fig. 9; the start-coordinates position of the finishing size corresponds, for example, to the coordinates position of the upper-left reference point of the image 34 in Fig. 9.

After the finishing size and its start-coordinates position are calculated, the calculated size and start-coordinates position are used to cut a finishing image from a scanned image (S106). The scanned image corresponds, for example, to the image 32 in Fig. 8; the finishing image corresponds to the image 34 in Fig. 9.

The process proceeds to Fig. 11, and whether defects, such as smudges due to printing, are present is sequentially determined for the finishing image on a page-by-page basis (S107). The defect information is stored and managed on a page-by-page basis in the page-configuration managing unit 123 in Fig. 2. Thus, this defect information is used.

If defects are present (YES in S107), it is determined, for each of the defects, whether the position of the defect corresponds to a register mark or a margin (S108). "Register marks" are known as trim marks; center register marks indicate the centers at the top, bottom, left, and right of the finishing position; corner register marks serve as marks for positions for cutting using a cutter. If the position of a detected defect corresponds to a register mark or a margin (YES in S108), such a register mark or margin is removed in bookbinding. Thus, the defect, which is located at such a position, is deleted, and is excluded from display targets (S109).

After defects, which are located at register marks or in margins, are deleted, or if no defects are present at register marks or margins (NO in S108), the display-start-coordinates positions of the defects are calculated again in consideration of shifts of the positions of the defects due to cutting (S110). The finishing image is stored for each page along with the position information of its defects (S111).

The process described above is repeatedly performed for all the pages in the finishing images (repeatedly performed by returning to S106 until NO is determined in S112). The positions of defects which are present in the finishing images are adjusted, and the finishing images are displayed in page order after bookbinding in association with their defects (S113).

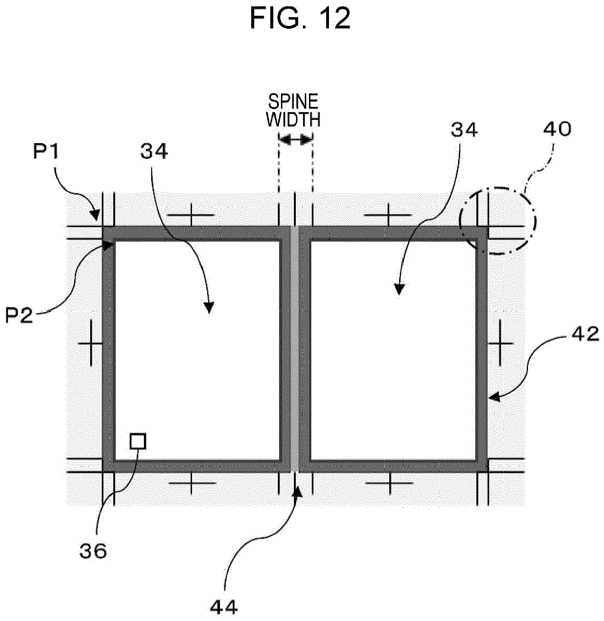

Fig. 12 schematically illustrates the relationship between scanned image and finishing image. Fig. 12 illustrates the case of saddle-stitch bookbinding illustrated in Figs. 4A to 4C.

Fig. 12 illustrates, as rectangular areas, finishing images 34, each corresponding to one page, in a scanned image 42 of a printed sheet (sheet) obtained in the printing process. Fig. 12 illustrates center register marks and corner register marks 40. The inside lines of corner register marks 40 define the size of a finishing image. The finishing images 34 are present completely inside the area of the scanned image 42. The area between the scanned image 42 and the finishing images 34 is a margin. Among the defects detected in the scanned image 42, a defect, which is located at a register mark 40 or in a margin, does not affect the finishing images 34 as described above. Thus, such a defect is deleted and is not displayed as a defect.

When a defect 36 is present in the area of a finishing image 34, the coordinates of the position of the defect 36 are determined by using, as the reference, the upper-left point P1 of the scanned image 42. Thus, to display the defect 36 at the correct position in the finishing image 34, the coordinates of the defect 36 are calculated again to obtain the coordinates using, as the reference, the upper-left point P2 of the finishing image 34.

In the process in Figs. 10 and 11, a defect at a register mark or in a margin is deleted. In addition to this, a defect located at a position, at which the defect is possibly present in a scanned image 42 but is not possibly present on the corresponding pages after bookbinding, for example, a defect, which is located in a spine-width area 44 in Fig. 12, may be similarly deleted and excluded from display targets. In short, among the defects detected in the scanned image 42, a defect, which is not visually recognized after bookbinding by a user, may be deleted, and only defects, which are present in visible areas, may remain and be displayed.

In the present exemplary embodiment, the case of saddle-stitch bookbinding is described as an example. However, the present disclosure is not limited to this. The present disclosure may be similarly applied to other imposition patterns, for example, side-stitch binding, catalog printing, 4-up, and cut and stack. The "side-stitch binding" is a bookbinding method of stapling sheets with wires at about one to three positions of about 5 mm from the end of the sheets. The "cut and stack" is a bookbinding method in which input pages, whose number has been set, are arranged in each sheet in the following manner: when printed sheets are stacked and are then cut to obtain stacks of pages which are stacked on top of one another, the arrangement of the resulting pages is in the page order.

In the present exemplary embodiment, the position of a detected defect is displayed by being surrounded by a rectangle. In addition to this, the type of a defect may be displayed, for example, by using a figure or characters. The type of a defect may be classified on the basis of the shape and size of the detected defect. The types of defects may include a dot, a streak, and a folded corner of a sheet.

The present exemplary embodiment also encompasses a printed-matter inspection system including a processor that inspects printed matter, and a display device that displays the result of the inspection. The processor compares a scanned image, which is obtained by scanning an inspection-target page in the printed matter, with a reference image, which is generated by using rasterization data of the inspection-target page, to perform inspection for defects which are present in the scanned image. Among the defects, the processor displays, on the display device, a defect which is present in a visible area obtained in the assumption that the printed matter is bound. The present exemplary embodiment also encompasses a program which causes a processor to execute a process including comparing a scanned image, which is obtained by scanning an inspection-target page in printed matter, with a reference image, which is generated by using rasterization data of the inspection-target page, to perform inspection for defects which are present in the scanned image; and, among the defects, displaying, on a display device, a defect which is present in a visible area obtained in the assumption that the printed matter is bound.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) A printed-matter inspection system comprising:
   a processor that inspects printed matter; and
   a display device that displays a result of the inspection,
   wherein the processor is configured to:
      compare a scanned image with a reference image of an inspection-target page of the printed matter to perform inspection for at least one defect that is present in the scanned image, the scanned image being obtained by scanning the inspection-target page; and
      obtain information about post-processing that is to be performed on the printed matter, and, on a basis of the information about the post-processing, display, on the display device, the at least one defect in association with at least one simulated image of the printed matter obtained after the post-processing.
(((2))) The printed-matter inspection system according to (((1))),
   wherein the processor is configured to:
   display the at least one defect on a page in the at least one simulated image of the printed matter obtained after the post-processing.
(((3))) The printed-matter inspection system according to (((2))),
   wherein the processor is configured to:
   convert, for display, a position of the at least one defect in the scanned image to a position in the at least one simulated image of the printed matter obtained after the post-processing.
(((4))) The printed-matter inspection system according to any one of (((1))) to (((3))),
   wherein the at least one defect comprises a plurality of defects, and
   wherein the processor is configured to:
      among the defects that are present in the scanned image, cause a defect that is not present in the at least one simulated image of the printed matter obtained after the post-processing, to be hidden.
(((5))) The printed-matter inspection system according to (((4))),
   wherein the processor is configured to:
   among the defects that are present in the scanned image, cause a defect that is at a position of a register mark or at a position in a margin in the printed matter obtained after the post-processing, to be hidden.
(((6))) The printed-matter inspection system according to (((1))) or (((2))),
   wherein the at least one simulated image comprises a plurality of simulated images, and
   wherein the processor is configured to:
      display, in page order, the simulated images of the printed matter obtained after the post-processing, and display the at least one defect in accordance with the page order.
(((7))) The printed-matter inspection system according to (((6))),
   wherein the processor is configured to:
   display, in a spread, the simulated images of the printed matter obtained after the post-processing, and display the at least one defect in the spread.
(((8))) The printed-matter inspection system according to any one of (((1))) to (((7))),
   wherein the processor is configured to:
   further display a type of the at least one defect on the display device.
(((9))) A program causing a computer to execute a process comprising:
   comparing a scanned image with a reference image of an inspection-target page of printed matter to perform inspection for a defect that is present in the scanned image, the scanned image being obtained by scanning the inspection-target page; and
   obtaining information about post-processing that is to be performed on the printed matter, and, on a basis of the information about the post-processing, displaying, on a display device, the defect in association with a simulated image of the printed matter obtained after the post-processing.

The printed-matter inspection system and the program according to (((1))) and (((9))) enable a defect, which is detected at the time point of completion of printing, to be recognized on an image after post-processing.

The printed-matter inspection system according to (((2))), (((6))), and (((7))) further enables inspection results to be checked in the page order of simulated images of printed matter obtained after post-processing.

The printed-matter inspection system according to (((3))) further enables the correct position of a defect in a simulated image of printed matter, which is obtained after post-processing, to be recognized.

The printed-matter inspection system according to (((4))) and (((5))) further enables a defect, which is not present in a simulated image of printed matter obtained after post-processing, to be prevented from being mistakenly displayed.

The printed-matter inspection system according to (((8))) further enables the type of a defect to be recognized.

## Claims

1. A printed-matter inspection system comprising:
a processor that inspects printed matter; and
a display device that displays a result of the inspection,
wherein the processor is configured to:
compare a scanned image with a reference image of an inspection-target page of the printed matter to perform inspection for at least one defect that is present in the scanned image, the scanned image being obtained by scanning the inspection-target page; and
obtain information about post-processing that is to be performed on the printed matter, and, on a basis of the information about the post-processing, display, on the display device, the at least one defect in association with at least one simulated image of the printed matter obtained after the post-processing.

2. The printed-matter inspection system according to claim 1,
wherein the processor is configured to:
display the at least one defect on a page in the at least one simulated image of the printed matter obtained after the post-processing.

3. The printed-matter inspection system according to claim 2,
wherein the processor is configured to:
convert, for display, a position of the at least one defect in the scanned image to a position in the at least one simulated image of the printed matter obtained after the post-processing.

4. The printed-matter inspection system according to any one of claims 1 to 3,
wherein the at least one defect comprises a plurality of defects, and
wherein the processor is configured to:
among the defects that are present in the scanned image, cause a defect that is not present in the at least one simulated image of the printed matter obtained after the post-processing, to be hidden.

5. The printed-matter inspection system according to claim 4,
wherein the processor is configured to:
among the defects that are present in the scanned image, cause a defect that is at a position of a register mark or at a position in a margin in the printed matter obtained after the post-processing, to be hidden.

6. The printed-matter inspection system according to claim 1 or claim 2,
wherein the at least one simulated image comprises a plurality of simulated images, and
wherein the processor is configured to:
display, in page order, the simulated images of the printed matter obtained after the post-processing, and display the at least one defect in accordance with the page order.

7. The printed-matter inspection system according to claim 6,
wherein the processor is configured to:
display, in a spread, the simulated images of the printed matter obtained after the post-processing, and display the at least one defect in the spread.

8. The printed-matter inspection system according to any one of claims 1 to 7, wherein the processor is configured to:
further display a type of the at least one defect on the display device.

9. A program causing a computer to execute a process comprising:
comparing a scanned image with a reference image of an inspection-target page of printed matter to perform inspection for a defect that is present in the scanned image, the scanned image being obtained by scanning the inspection-target page; and
obtaining information about post-processing that is to be performed on the printed matter, and, on a basis of the information about the post-processing, displaying, on a display device, the defect in association with a simulated image of the printed matter obtained after the post-processing.

10. A printed-matter inspection method comprising:
comparing a scanned image with a reference image of an inspection-target page of printed matter to perform inspection for a defect that is present in the scanned image, the scanned image being obtained by scanning the inspection-target page; and
obtaining information about post-processing that is to be performed on the printed matter, and, on a basis of the information about the post-processing, displaying, on a display device, the defect in association with a simulated image of the printed matter obtained after the post-processing.
